# EUROPEAN PATENT APPLICATION

(11) **EP 4 311 140 A1**
(43) Date of publication of application: **24.01.2024**
(21) Application number: 22770405.3
(22) Date of filing: 11.03.2022
(51) Int. Cl.: H04L 1/00

(54) **HYBRID AUTOMATIC REPEAT REQUEST INFORMATION PROCESSING METHOD AND APPARATUS, AND COMMUNICATION DEVICE**

(30) Priority: 19.03.2021 CN 202110296878
(71) Applicant: China Mobile Communication Co., Ltd Research Institute, Beijing 100053 (CN); China Mobile Communications Group Co., Ltd., Beijing 100032 (CN)
(72) Inventor: YANG, Tuo, Beijing 100053 (CN)
(74) Representative: GPI Brevets
(86) International application number: PCT/CN2022/080404
(87) International publication number: WO 2022/194050

(57) **Abstract**

Embodiments of the present disclosure disclose a hybrid automatic repeat request (HARQ) information processing method and apparatus, and communication device. The method includes: determining, by a terminal, a mapping between HARQ information and at least one of following physical uplink control channel (PUCCH) information: a parameter value used for calculating a cyclic shift, an index of an orthogonal cover code or a PUCCH resource index, based on a predefinition or a configuration configured by a network device.

## Description

### CROSS-REFERENCE TO RELATED APPLICATION

The present application claims priority to the Chinese patent application No. 202110296878.4, filed in China on March 19, 2021, a disclosure of which is incorporated herein by reference in its entirety.

### TECHNICAL FIELD

The present application relates to the field of wireless communication technology, in particular to a hybrid automatic repeat request (HARQ) information processing method and apparatus, and communication device.

### BACKGROUND

HARQ feedback technology has been introduced to New Radio (NR) multicast and broadcast technologies, to improve the reliability of multicast/broadcast services. There are two types of HARQ feedback schemes. One type of HARQ feedback scheme is ACK/NACK-based HARQ feedback, that is, each terminal needs to provide ACK or NACK feedback for the received physical downlink shared channel (PDSCH). Another type of HARQ feedback scheme is NACK-only HARQ feedback scheme, wherein the terminal only feeds back an NACK when it fails to correctly receive the PDSCH. Multiple terminals can share physical uplink control channel (PUCCH) resources used for NACK-only HARQ feedback. If only 1 bit of NACK information needs to be reported in one uplink (UL) slot, then all terminals can feed back this 1 bit of NACK information on the same PUCCH resource; if the base station detects this PUCCH, the base station can determine that there is a terminal that does not correctly receive the PDSCH. Therefore, compared to the ACK/NACK HARQ feedback scheme, the main purpose of the NACK-only HARQ feedback scheme is to save PUCCH resources for simultaneous HARQ feedbacks from multiple users.

However, in the conventional time division duplexing (TDD) frame structure, e.g., a frame structure with 10 slots including 7 downlink (DL) slots, 2 uplink (UL) slots and 1 special slot, HARQ feedback of the PDSCH of 7 DL slots needs to be provided in two UL slots, that is, HARQ feedback in one UL slot needs to carry more than 1 bits of NACK information. One solution is to configure multiple PUCCH resources in one UL slot, and each PUCCH resource corresponds to HARQ feedback information of one PDSCH. However, considering that some terminals has limited capabilities, some terminals can only send two PUCCHs in one slot, which limits the maximum number of PDSCHs for which HARQ feedback can be simultaneously provided in one slot to 2. Another solution is to generate an HARQ codebook, similar to traditional unicast HARQ feedback. Each terminal builds its own HARQ codebook and feeds back on its own PUCCH resources. However, in this case, the overhead of PUCCH resources increases and the goal underlying introducing the NACK-only HARQ feedback scheme cannot be achieved.

### SUMMARY

Embodiments of the present disclosure provide an HARQ information processing method and apparatus, and communication device.

The technical solution of the embodiments of the present disclosure is implemented as follows.

In a first aspect, an embodiment of the present disclosure provides an HARQ information processing method. The method includes: determining, by a terminal, a mapping between HARQ information and at least one of following PUCCH information: a parameter value used for calculating a cyclic shift, an index of an orthogonal cover code, or a PUCCH resource index, based on a predefinition or a configuration configured by a network device.

In some optional embodiments of the present disclosure, the method further includes: determining, by the terminal based on HARQ information to be reported and the mapping, at least one of the following information for a PUCCH transmission: the parameter value used for calculating the cyclic shift, the index of the orthogonal cover code, or the PUCCH resource index.

In some optional embodiments of the present disclosure, the method further includes: transmitting, by the terminal, the PUCCH based on at least one of the following information for the PUCCH transmission: the parameter value used for calculating the cyclic shift, the index of the orthogonal cover code, or the PUCCH resource index, and based on a PUCCH resource or resource set configured by the network device.

In some optional embodiments of the present disclosure, the PUCCH is used for reporting HARQ information of a PDSCH carrying multicast and/or broadcast service, or HARQ information of PDSCH shared by multiple terminals.

In some optional embodiments of the present disclosure, the method further includes: receiving, by the terminal, a first higher layer signaling from the network device, wherein the first higher layer signaling includes configuration information of the PUCCH resource or resource set.

In some optional embodiments of the present disclosure, the determining, by the terminal, the mapping between the HARQ information and the at least one of the following PUCCH information: the parameter value used for calculating the cyclic shift, the index of the orthogonal cover code, or the PUCCH resource index, based on the configuration configured by the network device includes: receiving, by the terminal, a second higher layer signaling from the network device, wherein the second higher layer signaling includes the mapping between the HARQ information and the at least one of the following PUCCH information: the parameter value used for calculating the cyclic shift, the index of the orthogonal cover code, or the PUCCH resource index.

In some optional embodiments of the present disclosure, the method further includes: determining, by the terminal based on a reception of at least one PDSCH for carrying multicast and/or broadcast service or associated with the multicast and/or broadcast service, the HARQ information to be reported.

In a second aspect, an embodiment of the present disclosure further provides an HARQ information processing method. The method includes: determining, by a network device, a mapping between HARQ information and at least one of following PUCCH information: a parameter value used for calculating a cyclic shift, an index of an orthogonal cover code or a PUCCH resource index, based on a predefinition or a configuration configured by the network device for a terminal.

In some optional embodiments of the present disclosure, the method further includes: receiving, by the network device, a PUCCH from the terminal, and determining, by the network device, at least one of the following PUCCH information of the PUCCH: the parameter value used for calculating the cyclic shift, the index of the orthogonal cover code, or the PUCCH resource index; determining, by the network device, HARQ information based on the mapping and the at least one of the following PUCCH information of the PUCCH: the parameter value used for calculating the cyclic shift, the index of the orthogonal cover code, or the PUCCH resource index.

In some optional embodiments of the present disclosure, the PUCCH is used for reporting HARQ information of a PDSCH carrying multicast and/or broadcast service, or HARQ information of PDSCH shared by multiple terminals.

In some optional embodiments of the present disclosure, the method further includes: configuring, by the network device for the terminal, a PUCCH resource or resource set for transmitting the PUCCH.

In some optional embodiments of the present disclosure, the configuring, by the network device for the terminal, the PUCCH resource or resource set for transmitting the PUCCH includes: sending, by the network device, a first higher layer signaling to the terminal, wherein the first higher layer signaling includes configuration information of the PUCCH resource or resource set.

In some optional embodiments of the present disclosure, configuring, by the network device for the terminal, the mapping between the HARQ information and the at least one of the following PUCCH information: the parameter value used for calculating the cyclic shift, the index of the orthogonal cover code or the PUCCH resource index, includes: sending, by the network device, a second higher layer signaling to the terminal, wherein the second higher layer signaling includes the mapping between the HARQ information and the at least one of the following PUCCH information: the parameter value used for calculating the cyclic shift, the index of the orthogonal cover code or the PUCCH resource index.

In a third aspect, an embodiment of the present disclosure further provides an HARQ information processing apparatus, including: a first determining unit, configured to determine a mapping between HARQ information and at least one of following PUCCH information: a parameter value used for calculating a cyclic shift, an index of an orthogonal cover code, or a PUCCH resource index, based on a predefinition or a configuration configured by a network device.

In some optional embodiments of the present disclosure, the first determining unit is further configured to determine, based on HARQ information to be reported and the mapping, at least one of the following information for a PUCCH transmission: the parameter value used for calculating the cyclic shift, the index of the orthogonal cover code, or the PUCCH resource index.

In some optional embodiments of the present disclosure, the apparatus further includes: a first communication unit, configured to transmit the PUCCH based on at least one of the following PUCCH information for the PUCCH transmission: the parameter value used for calculating the cyclic shift, the index of the orthogonal cover code, or the PUCCH resource index, and based on a PUCCH resource or resource set configured by the network device.

In some optional embodiments of the present disclosure, the PUCCH is used for reporting HARQ information of a PDSCH carrying multicast and/or broadcast service or HARQ information of PDSCH shared by multiple terminals.

In some optional embodiments of the present disclosure, the first communication unit is further configured to receive a first higher layer signaling from the network device, wherein the first higher layer signaling includes configuration information of the PUCCH resource or resource set.

In some optional embodiments of the present disclosure, the apparatus further includes: a second communication unit, configured to receive a second higher layer signaling from the network device, wherein the second higher layer signaling includes the mapping between the HARQ information and the at least one of the following PUCCH information: the parameter value used for calculating the cyclic shift, the index of the orthogonal cover code, or the PUCCH resource index.

In some optional embodiments of the present disclosure, the first determining unit is further configured to determine, based on a reception of at least one PDSCH for carrying multicast and/or broadcast service or associated with the multicast and/or broadcast service, the HARQ information to be reported.

In a fourth aspect, an embodiment of the present disclosure further provides a hybrid automatic repeat request (HARQ) information processing apparatus, including: a second determining unit, configured to determine a mapping between HARQ information and at least one of following PUCCH information: a parameter value used for calculating a cyclic shift, an index of an orthogonal cover code, or a PUCCH resource index, based on a predefinition or a configuration configured by the network device for a terminal.

In some optional embodiments of the present disclosure, the apparatus further includes: a third communication unit, configured to receive a PUCCH from the terminal, and determine at least one of the following PUCCH information of the PUCCH: the parameter value used for calculating the cyclic shift, the index of the orthogonal cover code, or the PUCCH resource index;
wherein the second determining unit is further configured to determine HARQ information, based on the mapping and the at least one of the following PUCCH information of the PUCCH: the parameter value used for calculating the cyclic shift, the index of the orthogonal cover code, or the PUCCH resource index.

In some optional embodiments of the present disclosure, the PUCCH is used for reporting HARQ information of a PDSCH carrying multicast and/or broadcast service or HARQ information of PDSCH shared by multiple terminals.

In some optional embodiments of the present disclosure, the third communication unit is further configured to configure, for the terminal, a PUCCH resource or resource set for transmitting the PUCCH.

In some optional embodiments of the present disclosure, the third communication unit is configured to send a first higher layer signaling to the terminal, wherein the first higher layer signaling includes configuration information of the PUCCH resource or resource set.

In some optional embodiments of the present disclosure, the apparatus further includes: a fourth communication unit, configured to send a second higher layer signaling to the terminal, wherein the second higher layer signaling includes the mapping between the HARQ information and the at least one of the following PUCCH information: the parameter value used for calculating the cyclic shift, the index of the orthogonal cover code, or the PUCCH resource index.

In a fifth aspect, an embodiment of the present disclosure further provides a computer-readable storage medium storing therein a computer program, wherein the computer program is configured to be executed by a processor, to implement the steps of the method according to the first aspect or to implement the steps of the method according to the second aspect.

In a sixth aspect, an embodiment of the present disclosure further provides a communication device, including a memory, a processor, and a program stored in the memory and capable of running on the processor, wherein the processor is configured to execute the program, to implement the steps of the method according to the first aspect or to implement the steps of the method according to the second aspect.

According to the HARQ information processing method and apparatus, and communication device provided by embodiments of the present disclosure, the terminal determines the mapping between the HARQ information and at least one of the following PUCCH information: the parameter value used for calculating the cyclic shift, the index of the orthogonal cover code or the PUCCH resource index, based on the predefinition or the configuration configured by the network device, such that multiple terminals may establish a correspondence between at least one of the following different information: cyclic shifts, orthogonal covering codes, or PUCCH resource indexes, and different respective HARQ information on the same PUCCH resource, and multiple terminals can feed back different HARQ information on shared PUCCH resources according to the terminals' respective correct or incorrect decoding of PDSCHs, thereby achieving the feedback of HARQ information of multiple PDSCHs in one slot without increasing resource overhead.

### BRIEF DESCRIPTION OF THE DRAWINGS

Fig. 1 is a schematic flowchart of an HARQ information processing method according to an embodiment of the present disclosure;
Fig. 2 is another schematic flowchart of an HARQ information processing method according to an embodiment of the present disclosure;
Fig. 3 is a schematic structural diagram of an HARQ information processing apparatus according to an embodiment of the present disclosure;
Fig. 4 is another schematic structural diagram of an HARQ information processing apparatus according to an embodiment of the present disclosure;
Fig. 5 is a schematic structural diagram of hardware of a communication device according to an embodiment of the present disclosure.

### DETAILED DESCRIPTION

The present disclosure will be described in further detail below with reference to the accompanying drawings and specific embodiments.

The technical solution of the embodiments of the present disclosure can be applied to various communication systems, such as, global system of mobile communication (GSM) system, long term evolution (LTE) system or 5^{th} generation (5G) system. Optionally, the 5G system or 5G network can also be referred to as New Radio (NR) system or NR network.

Exemplarily, the communication system to which embodiments of the present disclosure are applicable may include a network device and a terminal (also known as terminal device, communication terminal, etc.); a network device can be a device that communicates with the terminal. The network device can provide communication coverage within a certain area, and can communicate with terminals located in that area. Optionally, the network device can be a base station in various communication systems, such as an evolved Node B (eNB) in LTE systems, or a base station (gNB) in 5G or NR systems.

It should be understood that in the embodiments of the present disclosure, a device with a communication function in a network/system can be referred to as a communication device. The communication device may include a network device and a terminal with a communication function. The network device and the terminal device can be the specific devices mentioned above, which will not be repeated here; the communication device may also include other devices in the communication system, such as a network controller, mobile management entity, and other network entities, which are not limited in the embodiments of the present disclosure.

It should be understood that the terms "system" and "network" are often used interchangeably in this specification. The term "and/or" in this specification is merely a way of describing the association relationship between associated objects, indicating that there can be three relationships. For example, A and/or B can mean the following three situations: A exists alone, A and B exist simultaneously, and B exists alone. In addition, the symbol "/" in this specification generally indicates that the associated objects before and after the symbol are in an "or" relationship.

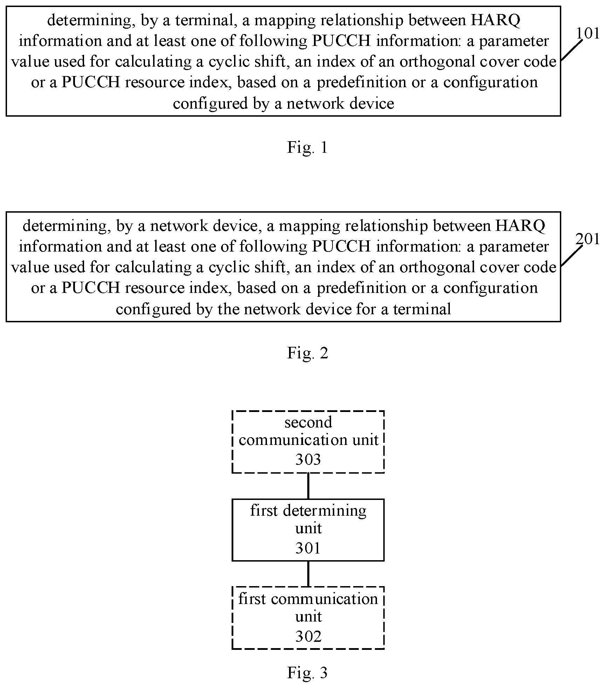

An embodiment of the present disclosure provides an HARQ information processing method. Fig. 1 is a schematic flowchart of the HARQ information processing method according to the embodiment of the present disclosure; as shown in Fig. 1, the method includes:
a step 101: determining, by a terminal, a mapping between HARQ information and at least one of following PUCCH information: a parameter value used for calculating a cyclic shift, an index of an orthogonal cover code or a PUCCH resource index, based on a predefinition or a configuration configured by a network device.

In this embodiment, the mapping may include at least one of the following information: the parameter value used for calculating the cyclic shift, the index of the orthogonal cover code, or the PUCCH resource index, and the corresponding HARQ information. If the cyclic shift is obtained by calculating based on multiple parameters, the parameter value used for calculating the cyclic shift may be at least some of the multiple parameters used to calculate the cyclic shift. The orthogonal cover code can also be called an orthogonal sequence. The HARQ information is also referred to as HARQ information to be reported or HARQ feedback information; the HARQ information can indicate whether the reception or decoding of each PDSCH is correct reception/decoding or incorrect reception/decoding. In some optional embodiments, the HARQ information can be embodied as an HARQ codebook or an HARQ information bit value.

By adopting the technical solution of the embodiment of the present disclosure, the terminal determines the mapping between the HARQ information and at least one of the following PUCCH information: the parameter value used for calculating the cyclic shift, the index of the orthogonal cover code or the PUCCH resource index, based on the predefinition or the configuration configured by the network device, such that multiple terminals may establish a correspondence between at least one of the following different information: cyclic shifts (or referred to as sequence cyclic shift), orthogonal covering codes, or PUCCH resource indexes, and different respective HARQ information on the same PUCCH resource, and multiple terminals can feedback different HARQ information on shared PUCCH resources according to the terminals' respective correct or incorrect reception or decoding of PDSCHs, thereby achieving the feedback of HARQ information of multiple PDSCHs in one slot without increasing resource overhead.

In some optional embodiments of the present disclosure, the method further includes: determining, by the terminal based on the reception of at least one PDSCH for carrying the multicast and/or broadcast service or associated with the multicast and/or broadcast service, the HARQ information to be reported.

In some optional embodiments of the present disclosure, the method further includes: determining, by the terminal based on the HARQ information to be reported and the mapping, at least one of the following information for a PUCCH transmission: the parameter value used for calculating the cyclic shift, the index of the orthogonal cover code, or the PUCCH resource index.

In some optional embodiments of the present disclosure, the method further includes: transmitting, by the terminal, the PUCCH based on at least one of the following information for the PUCCH transmission: the parameter value used for calculating the cyclic shift, the index of the orthogonal cover code, or the PUCCH resource index, and based on a PUCCH resource or resource set configured by the network device. The PUCCH resource or resource set is shared by multiple terminals.

Optionally, the PUCCH is used for reporting the HARQ information of a PDSCH carrying multicast and/or broadcast service or the HARQ information of PDSCH shared by multiple terminals.

In some optional embodiments of the present disclosure, the method further includes: obtaining, by the terminal, the PUCCH resource or resource set configured by the network device, wherein the PUCCH resource or resource set is associated with the multicast and/or broadcast service, or associated with the PDCCH scheduling the multicast and/or broadcast service.

Optionally, the obtaining, by the terminal, the PUCCH resource or resource set configured by the network device includes: receiving, by the terminal, a first higher layer signaling from the network device, wherein the first higher layer signaling includes configuration information of the PUCCH resource or resource set.

In some optional embodiments of the present disclosure, the determining, by the terminal, the mapping between the HARQ information and the at least one of the following PUCCH information: the parameter value used for calculating the cyclic shift, the index of the orthogonal cover code, or the PUCCH resource index, based on the configuration configured by the network device includes: receiving, by the terminal, a second higher layer signaling from the network device, wherein the second higher layer signaling includes the mapping between the HARQ information and the at least one of the following PUCCH information: the parameter value used for calculating the cyclic shift, the index of the orthogonal cover code, or the PUCCH resource index.

Based on the foregoing embodiments, an embodiment of the present disclosure further provides an HARQ information processing method. Fig. 2 is another schematic flowchart of the HARQ information processing method according to the embodiment of the present disclosure; as shown in Fig. 2, the method includes:
a step 201: determining, by a network device, a mapping between HARQ information and at least one of following PUCCH information: a parameter value used for calculating a cyclic shift, an index of an orthogonal cover code or a PUCCH resource index, based on a predefinition or a configuration configured by the network device for a terminal.

In this embodiment, the mapping may include at least one of the following information: the parameter value used for calculating the cyclic shift, the index of the orthogonal cover code, or the PUCCH resource index, and the corresponding HARQ information. If the cyclic shift is obtained by calculating based on multiple parameters, the parameter value used for calculating the cyclic shift may be at least some of the multiple parameters used to calculate the cyclic shift. The orthogonal cover code can also be called an orthogonal sequence. The HARQ information is also referred to as HARQ information to be reported or HARQ feedback information; the HARQ information can indicate whether the reception/decoding of each PDSCH is correct reception/decoding or incorrect reception/decoding. In some optional embodiments, the HARQ information can be embodied as an HARQ codebook or an HARQ information bit value.

By adopting the technical solution of the embodiment of the present disclosure, the network device (such as the base station) determines the mapping between the HARQ information and at least one of the following PUCCH information: the parameter value used for calculating the cyclic shift, the index of the orthogonal cover code or the PUCCH resource index, based on the predefinition or the configuration configured by the network device for the terminal, such that multiple terminals may establish a correspondence between at least one of the following different information: cyclic shifts, orthogonal covering codes, or PUCCH resource indexes, and different respective HARQ information on the same PUCCH resource, and multiple terminals can feed back different HARQ information on shared PUCCH resources according to the terminals' respective correct or incorrect reception or decoding of PDSCHs, thereby achieving the feedback of HARQ information of multiple PDSCHs in one slot without increasing resource overhead. The network device (such as the base station) can obtain HARQ information based on the mapping, and according to the mapping and at least one of the following information of the received PUCCH: the parameter value used for calculating the cyclic shift, the index of the orthogonal cover code or the PUCCH resource index.

In some optional embodiments of the present disclosure, the method further includes: receiving, by the network device, a PUCCH from the terminal, and determining, by the network device, at least one of the following PUCCH information of the PUCCH: the parameter value used for calculating the cyclic shift, the index of the orthogonal cover code, or the PUCCH resource index; determining, by the network device, HARQ information based on the mapping and the at least one of the following PUCCH information of the PUCCH: the parameter value used for calculating the cyclic shift, the index of the orthogonal cover code, or the PUCCH resource index.

Optionally, the PUCCH is used for reporting HARQ information of a PDSCH carrying multicast and/or broadcast service, or HARQ information of PDSCH shared by multiple terminals.

In some optional embodiments of the present disclosure, the method further includes: configuring, by the network device for the terminal, a PUCCH resource or resource set for transmitting the PUCCH; the PUCCH resource or resource set is associated with the multicast and/or broadcast service, or associated with the PDCCH scheduling the multicast and/or broadcast service.

In some optional embodiments of the present disclosure, the configuring, by the network device for the terminal, the PUCCH resource or resource set for transmitting the PUCCH includes: sending, by the network device, a first higher layer signaling to the terminal, wherein the first higher layer signaling includes configuration information of the PUCCH resource or resource set.

In some optional embodiments of the present disclosure, configuring, by the network device for the terminal, the mapping between the HARQ information and the at least one of the following PUCCH information: the parameter value used for calculating the cyclic shift, the index of the orthogonal cover code or the PUCCH resource index, includes: sending, by the network device, a second higher layer signaling to the terminal, wherein the second higher layer signaling includes the mapping between the HARQ information and the at least one of the following PUCCH information: the parameter value used for calculating the cyclic shift, the index of the orthogonal cover code or the PUCCH resource index.

The embodiments of the present disclosure will be described in further detail below with reference to the specific examples.

### Example 1

This example is based on the PUCCH transmission scheme of PUCCH format 0 or PUCCH format 1. This example establishes a mapping between different cyclic shift values and different respective HARQ information. Different terminals determine the cyclic shift values according to the HARQ information to be transmitted and the foregoing mapping.

Exemplarily, the sequence length of the PUCCH format 0 is 12, which means that up to 12 cyclic shift values can be used to indicate 12 HARQ information combination states or HARQ information bits values.

Exemplarily, the PUCCH format 1 of one physical resource block (PRB) (14 symbols) supports up to 12 sequences and 7 orthogonal cover codes, that is, one PRB can carry up to 84 different HARQ information.

For example, for 3 PDSCHs, a total of 2³=8 HARQ information combination states or HARQ information bits values are required; for 4 PDSCHs, a total of 2⁴=16 HARQ information combination states or HARQ information bits values are required.

Then, the values of the HARQ information bits corresponding to different parameter values used for calculating the cyclic shift or sequence cyclic shifts can be determined based on a predefinition in a protocol or a configuration configured by a network device. The network device configures the same PUCCH resource for at least one terminal.

The terminal can determine, according to the HARQ information to be transmitted by the terminal, the corresponding PUCCH's parameter value used for calculating the cyclic shift.

Although the PUCCH resource for different terminals are the same, the PUCCH sequences using different cyclic shifts (or sequence cyclic shifts) are orthogonal to each other. The base station can detect which sequence or sequences are sent by the terminal on the PUCCH resource, and thus know the HARQ feedbacks of different terminals.

For specific mappings between PUCCH cyclic shifts and HARQ information, reference may be made to Tables 1-1, 1-2, 2-1, and 2-2 below. The first row of Tables 1-1, 1-2, 2-1, and 2-2 is the HARQ information in the foregoing embodiments of this disclosure, or the values of HARQ information bits. Tables 1-1 and 1-2 are used to represent the receptions of 3 PDSCHs, and each bit value corresponds to the reception of one PDSCH. Tables 2-1 and 2-2 are used to represent the receptions of 2 PDSCHs, and each bit value corresponds to the reception of one PDSCH. Exemplarily, a bit value of 1 can represent that the corresponding PDSCH is correctly received, that is, feeding back an HARQ-ACK; a bit value of 0 can represent that the corresponding PDSCH is incorrectly received, that is, feeding back an HARQ-NACK. Of course, the HARQ information in Tables 1-1, 1-2, 2-1 and 2-2 are just for example. 0 may be used to represent that the corresponding PDSCH is correctly received and 1 may be used to represent that the corresponding PDSCH is incorrectly received, which is not limited in this embodiment.

In this example, Tables 1-1, 1-2, 2-1 and 2-2 provide values of cyclic shift, and what is recorded in the foregoing mapping can be parameter values used for calculating the cyclic shift. The values of the cyclic shift are only given as an example and can also be predefined or configured as other values.

In addition, the difference between Table 1-1 and Table 1-2 is that there is no {1, 1, 1}, that is, the case that all three PDSCHs are correctly received (where 1 can represent that the corresponding PDSCH is correctly received), in Table 1-2. When Table 1-2 is applied, if the terminal correctly receives all three PDSCHs, there is no need to provide HARQ feedback; while in other cases, the HARQ feedback is required. When Table 1-1 is applied, the terminal provides an HARQ feedback for all cases of correct or incorrect reception of the three PDSCHs. The difference between Table 2-1 and Table 2-2 is similar.

**Table 1-1**

| HARQ-ACK Value | {1,1,1} | {1,1,0} | {1,0,1} | {0,1,1} | {1,0,0} | {0,1,0} | {0,0,1} | {0,0,0} |
|---|---|---|---|---|---|---|---|---|
| cyclic shift | 0 | 2 | 3 | 4 | 6 | 8 | 10 | 11 |

**Table 1-2**

| HARQ-ACK Value | {1,1,0} | {1,0,1} | {0,1,1} | {1,0,0} | {0,1,0} | {0,0,1} | {0,0,0} |
|---|---|---|---|---|---|---|---|
| cyclic shift | 0 | 2 | 3 | 4 | 6 | 8 | 10 |

**Table 2-1**

| HARQ-ACK Value | {0, 0} | {0,1} | {1, 1} | {1,0} |
|---|---|---|---|---|
| cyclic shift | 0 | 3 | 6 | 9 |

**Table 2-2**

| HARQ-ACK Value | {0, 0} | {0, 1} | {1,0} |
|---|---|---|---|
| cyclic shift | 0 | 4 | 8 |

### Example 2

This example is based on the PUCCH transmission scheme of PUCCH format 0 or PUCCH format 1. This example establishes a mapping between different combinations of cyclic shift values and PUCCH resource indexes and different respective HARQ information or HARQ information bits values. Each of different terminals determines the cyclic shift value and the PUCCH resource index according to the HARQ information to be transmitted by the terminal and the foregoing mapping.

In this example, values of the HARQ information bits corresponding to different parameter values used for calculating the cyclic shift and PUCCH resource indexes can be determined based on a predefinition in a protocol or a configuration configured by a network device. The network device configures the same multiple PUCCH resources for at least one terminal.

The terminal can determine, according to HARQ information to be transmitted by the terminal, the parameter value used for calculating the cyclic shift and the PUCCH resource index of a corresponding PUCCH.

For specific mappings between the parameter values used for calculating the cyclic shifts and the PUCCH resource indexes of the PUCCH and the HARQ information, reference may be made to Table 3 and Table 4 below. In addition, the difference between Table 3 and Table 4 is that there is no {1,1,1}, that is, the case that all three PDSCHs are correctly received (where 1 can represent that the corresponding PDSCH is correctly received), in Table 3. When Table 3 is applied, if the terminal correctly receives the three PDSCHs, there is no need to provide HARQ feedback; while in other cases, the HARQ feedback is required. When Table 4 is applied, the terminal provides HARQ feedback for all cases of correct or incorrect reception of the three PDSCHs.

The values of the cyclic shift and PUCCH resource index are only given as an example and can also be predefined or configured as other values.

**Table 3**

| HARQ-ACK Value | {1,1,0} | {1,0,1} | {0,1,1} | {1,0,0} | {0,1,0} | {0,0,1} | {0,0,0} |
|---|---|---|---|---|---|---|---|
| cyclic shift | 0 | 3 | 6 | 9 | 0 | 4 | 8 |
| PUCCH index | 0 | 0 | 0 | 0 | 1 | 1 | 1 |

**Table 4**

| HARQ-ACK Value | {1,1,1} | {1,1,0} | {1,0,1} | {0,1,1} | {1,0,0} | {0,1,0} | {0,0,1} | {0,0,0} |
|---|---|---|---|---|---|---|---|---|
| cyclic shift | 0 | 3 | 6 | 9 | 0 | 3 | 6 | 9 |
| PUCCH index | 0 | 0 | 0 | 0 | 1 | 1 | 1 | 1 |

In this embodiment, different HARQ information are distinguished by the cyclic shift (or sequence cyclic shift) and the PUCCH resource index. Compared to Example 1, for the same quantity of PDSCHs, the quantity of PUCCH resources configured by the base station increases, but the cyclic shift interval between different HARQ information becomes larger, which can improve the correctness of PUCCH detection.

It should be noted that this embodiment only lists the cases of two or three PDSCHs. The method of this embodiment supports HARQ feedback information of more PDSCHs, e.g., by adding more PUCCH resource indexes.

### Example 3

This example is based on the PUCCH transmission scheme of PUCCH format 0 or PUCCH format 1. This example establishes a mapping between different PUCCH resource indexes and different respective HARQ information or HARQ information bits values. Each of different terminals determines the PUCCH resource index according to the HARQ information to be transmitted by the terminal and the foregoing mapping.

In this example, values of the HARQ information bits corresponding to different PUCCH resource indexes can be determined based on a predefinition in a protocol or a configuration configured by a network device. The network device configures the same multiple PUCCH resources for at least one terminal. The terminal may determine, according to the HARQ information to be transmitted by the terminal, a corresponding PUCCH resource index.

For specific mappings between the PUCCH resource indexes and the HARQ information, reference may be made to Table 5 and Table 6 below. In addition, the difference between Table 5 and Table 6 is that there is no {1,1,1}, that is, the case that all three PDSCHs are correctly received (where 1 can represent that the corresponding PDSCH is correctly received), in Table 5. When Table 5 is applied, if the terminal correctly receives all three PDSCHs, there is no need to provide HARQ feedback; while in other cases, the HARQ feedback is required. When Table 6 is applied, the terminal provides HARQ feedback for all cases of correct or incorrect reception of the three PDSCHs.

The values of the PUCCH resource index are only given as an example and can also be predefined or configured as other values.

**Table 5**

| HARQ-ACK Value | {1,1,0} | {1,0,1} | {0,1,1} | {1,0,0} | {0,1,0} | {0,0,1} | {0,0,0} |
|---|---|---|---|---|---|---|---|
| PUCCH index | 0 | 1 | 2 | 3 | 4 | 5 | 6 |

**Table 6**

| HARQ-ACK Value | {1,1,1} | {1,1,0} | {1,0,1} | {0,1,1} | {1,0,0} | {0,1,0} | {0,0,1} | {0,0,0} |
|---|---|---|---|---|---|---|---|---|
| PUCCH index | 0 | 1 | 2 | 3 | 4 | 5 | 6 | 7 |

In this embodiment, different HARQ information are only distinguished by the PUCCH resource index. Compared to Example 1 and Example 2, for the same quantity of PDSCHs, the number of PUCCH resources configured by the base station increases, but one PUCCH resource corresponds to only one cyclic shift (i.e., one type of sequence), which can improve the reliability of PUCCH detection and reduce the complexity of PUCCH detection by the base station.

It should be noted that this example only lists the cases of three PDSCHs. The method of this embodiment supports HARQ information of more PDSCHs, e.g., by adding more PUCCH resource indexes.

### Example 4

This example is based on the PUCCH transmission scheme of PUCCH format 1.

This example establishes a correspondence between different combinations of cyclic shifts and/or time-domain OCCs (i.e., orthogonal covering codes or orthogonal sequences) and different respective HARQ information.

Exemplarily, the PUCCH format 1 of one PRB (14 symbols) can support up to 12 sequences and 7 orthogonal covering codes, that is, one PRB can carry up to 84 different HARQ information.

In this example, the HARQ information corresponding to different cyclic shift or sequence cyclic shift parameter values and/or orthogonal covering codes (OCCs) or orthogonal sequences can be determined based on a predefinition in a protocol or a configuration configured by a network device. The network device configures the same multiple PUCCH resources for at least one terminal.

The terminal determines, according to HARQ information to be transmitted by the terminal, the parameter value used for calculating the cyclic shift and/or the orthogonal covering code or orthogonal sequence of the used PUCCH.

The values of the cyclic shift and/or the orthogonal covering code or orthogonal sequence are only given as an example and can also be predefined or configured as other values.

For example, Table 7 shows a mapping between orthogonal sequences and HARQ information.

**Table 7**

| HARQ-ACK Value | {1,1,0} | {1,0,1} | {0,1,1} | {1,0,0} | {0,1,0} | {0,0,1} | {0,0,0} |
|---|---|---|---|---|---|---|---|
| orthogonal sequence | [0 0 0 0 0 0 0] | [0 1 2 3 4 5 6] | [0 2 4 6 1 3 5] | [0 3 62 5 1 4] | [04152 6 3] | [0 5 3 1 6 4 2] | [0 6 5 43 2 1] |

For example, Table 8-1 and Table 8-2 show mappings between cyclic shifts and HARQ information. The difference between Table 8-1 and Table 8-2 lies in whether there is a case of {1, 1, 1}, that is, the case that all three PDSCHs are correctly received (1 can represent that the corresponding PDSCH is correctly received). Table 8-1 does not have {1, 1, 1}, that is, does not have the case that all three PDSCHs are correctly received (1 can represent that the corresponding PDSCH is correctly received). When Table 8-1 is applied, if the terminal correctly receives the three PDSCHs, there is no need to provide HARQ feedback; in other cases, the HARQ feedback is required. When Table 8-2 is applied, the terminal provides HARQ feedback for all cases of correct or incorrect reception of the three PDSCHs.

**Table 8-1**

| HARQ-ACK Value | {1,1,0} | {1,0,1} | {0,1,1} | {1,0,0} | {0,1,0} | {0,0,1} | {0,0,0} |
|---|---|---|---|---|---|---|---|
| cyclic shift | 0 | 2 | 3 | 4 | 6 | 8 | 10 |

**Table 8-2**

| HARQ-ACK Value | {1,1,1} | {1,1,0} | {1,0,1} | {0,1,1} | {1,0,0} | {0,1,0} | {0,0,1} | {0,0,0} |
|---|---|---|---|---|---|---|---|---|
| cyclic shift | 0 | 2 | 3 | 4 | 6 | 8 | 10 | 11 |

For another example, Table 9-1 and Table 9-2 show the mappings between orthogonal sequences, cyclic shifts and the HARQ information. The difference between Table 9-1 and Table 9-2 lies in whether there is a case of {1, 1, 1, 1}, that is, the case that all four PDSCHs are correctly received (1 can represent that the corresponding PDSCH is correctly received). Table 9-2 does not have {1, 1, 1, 1}, that is, does not have the case that all four PDSCHs are correctly received (1 can represent that the corresponding PDSCH is correctly received). When Table 9-2 is applied, if the terminal correctly receives the four PDSCHs, there is no need to provide HARQ feedback; while in other cases, the HARQ feedback is required. When Table 9-1 is applied, the terminal provides HARQ feedback for all cases of correct or incorrect reception of the four PDSCHs.

**Table 9-1**

| HARQ-ACK Value | {1,1,1,1 } | {1,1,1,0 } | {1,1,0,1 } | {1,0,1,1 } | {0,1,1,1 } | {0,1,1,0 } | {0,1,0,1 } | {0,0,1,1 } |
|---|---|---|---|---|---|---|---|---|
| cyclic shift | 0 | 3 | 6 | 9 | 0 | 3 | 6 | 9 |
| orthogona l sequence | [0000 000] | [0000 000] | [0000 000] | [0000 000] | [0246 135] | [0246 135] | [0246 135] | [0246 135] |

| HARQ-ACK Value | {1,0,0,1} | {1,0,1,0} | {1,1,0,0} | {1,0,0,0 } | {0,0,0,1} | {0,0,1,0} | {0,1,0,0} | {0,0,0,0} |
|---|---|---|---|---|---|---|---|---|
| cyclic shift | 2 | 5 | 8 | 11 | 2 | 5 | 8 | 11 |
| orthogona l sequence | [0415 263] | [0415 263] | [0415 263] | [0415 263] | [0654 321] | [0654 321] | [0654 321] | [0654 321] |

**Table 9-2**

| | HARQ-ACK Value | | {1,1,1,0} | | {1,1,0,1 } | | {1,0,1,1 } | | {0,1,1,1 } | | {0,1,1,0 } | | {0,1,0,1 } | | {0,0,1,1 } | | |
|---|---|---|---|---|---|---|---|---|---|---|---|---|---|---|---|---|---|
| | cyclic shift | | 3 | | 6 | | 9 | | 0 | | 3 | | 6 | | 9 | | |
| | orthogonal sequence | | [0000 000] | | [0000 000] | | [0000 000] | | [0246 135] | | [0246 135] | | [0246 135] | | [0246 135] | | |

| HARQ-ACK Value} | | {1,0,0,1 | | {1,0,1,0 } | | {1,1,0,0 } | | {1,0,0,0 } | | {0,0,0,1 } | | {0,0,1,0 } | | {0, 1,0,0 } | | {0,0,0,0} | |
|---|---|---|---|---|---|---|---|---|---|---|---|---|---|---|---|---|---|
| cyclic shift | | 2 | | 5 | | 8 | | 11 | | 2 | | 5 | | 8 | | 11 | |
| o l rthogona sequence | | [0415 263] | | [0415 263] | | [0415 263] | | [0415 263] | | [0654 321] | | [0654 321] | | [0654 321] | | [0654 321] | |

It should be noted that, this embodiment only lists the cases of four PDSCHs. The method of this embodiment supports HARQ information of more PDSCHs, e.g., by adding more PUCCH cyclic shifts.

### Example 5

This example is based on the PUCCH transmission scheme of PUCCH format 1.

This example establishes a mapping between different combinations of cyclic shifts and/or time-domain OCCs (i.e., orthogonal covering codes or orthogonal sequences) and/or PUCCH resource indexes and different respective HARQ information.

In this example, the HARQ information corresponding to different cyclic shift or sequence cyclic shift parameter values and/or orthogonal covering codes (OCCs) or orthogonal sequences and/or PUCCH resource indexes can be determined based on a predefinition in a protocol or a configuration configured by a network device. The network device configures the same PUCCH resource for at least one terminal.

The terminal determines, according to the HARQ information to be transmitted by the terminal, the parameter value used for calculating the cyclic shift and/or the orthogonal covering code or orthogonal sequence and/or the PUCCH resource index of the used PUCCH.

The values of the cyclic shift and/or the orthogonal covering code or orthogonal sequence and/or the PUCCH resource index are only given as an example and can also be predefined or configured as other values.

For example, Table 10-1 and Table 10-2 show mappings between orthogonal sequences, PUCCH resource indexes and the HARQ information. The difference between Table 10-1 and Table 10-2 lies in whether there is a case of {1,1,1}, that is, the case that all three PDSCHs are correctly received (1 can represent that the corresponding PDSCH is correctly received). Table 10-1 does not have {1,1,1}, that is, does not have the case that all three PDSCHs are correctly received (1 can represent that the corresponding PDSCH is correctly received). When Table 10-1 is applied, if the terminal correctly receives the three PDSCHs, there is no need to provide the HARQ feedback; while in other cases, the HARQ feedback is required. When Table 10-2 is applied, the terminal provides HARQ feedback for all cases of correct or incorrect reception of the three PDSCHs.

**Table 10-1**

| HARQ-ACK Value | {1,1,0} | {1,0,1} | {0,1,1} | {1,0,0} | {0,1,0} | {0,0,1} | {0,0,0} |
|---|---|---|---|---|---|---|---|
| orthogonal sequence | [00000 00] | [02461 35] | [04152 63] | [06543 21] | [01234 56] | [03625 14] | [05316 42] |
| PUCCH resource index | 0 | 0 | 0 | 0 | 1 | 1 | 1 |

**Table 10-2**

| HARQ-ACK Value | {1,1,1} | {1,1,0} | {1,0,1} | {0,1,1} | {1,0,0} | {0,1,0} | {0,0,1} | {0,0,0} |
|---|---|---|---|---|---|---|---|---|
| cyclic shift | [000 000 0] | [024 613 5] | [041 526 3] | [065 432 1] | [012 345 6] | [036 25 1 4] | [053 164 2] | [000 000 0] |
| PUCCH resource index | 0 | 0 | 0 | 0 | 1 | 1 | 1 | 1 |

For another example, Table 11-1 and Table 11-2 show mappings between orthogonal sequences, cyclic shifts and PUCCH resource indexes and the HARQ information. The difference between Table 11-1 and Table 11-2 lies in whether there is a case of {1,1,1,1}, that is, the case that all four PDSCHs are correctly received (1 can represent that the corresponding PDSCH is correctly received). Table 11-2 does not have {1,1,1,1}, that is, does not have the case that all four PDSCHs are correctly received (1 can represent that the corresponding PDSCH is correctly received). When Table 11-2 is applied, if the terminal correctly receives the four PDSCHs, there is no need to provide the HARQ feedback; while in other cases, the HARQ feedback is required. When Table 11-1 is applied, the terminal provides HARQ feedback for all cases of correct or incorrect reception of the four PDSCHs.

**Table 11-1**

| HARQ-ACK Value | {1,1,1,1 } | {1,1,1,0 } | {1,1,0,1 } | {1,0,1,1 } | {0,1,1,1 } | {0,1,1,0 } | {0,1,0,1 } | {0,0,1,1 } |
|---|---|---|---|---|---|---|---|---|
| cyclic shift | 0 | 3 | 6 | 9 | 0 | 3 | 6 | 9 |
| orthogona l sequence | [0000 000] | [0000 000] | [0000 000] | [0000 000] | [0123 456] | [0123 456] | [0123 456] | [0123 456] |
| PUCCH resource index | 0 | 0 | 0 | 0 | 0 | 0 | 0 | 0 |

| HARQ-ACK Value | {1,0,0,1 } | {1,0,1,0 } | {1,1,0,0 } | {1,0,0,0 } | {0,0,0,1 } | {0,0,1,0 } | {0,1,0,0 } | {0,0,0,0 } |
|---|---|---|---|---|---|---|---|---|
| cyclic shift | 0 | 3 | 6 | 9 | 0 | 3 | 6 | 9 |
| orthogona l sequence | [0000 000] | [0000 000] | [0000 000] | [0000 000] | [0123 456] | [0123 456] | [0123 456] | [0123 456] |
| PUCCH resource index | 1 | 1 | 1 | 1 | 1 | 1 | 1 | 1 |

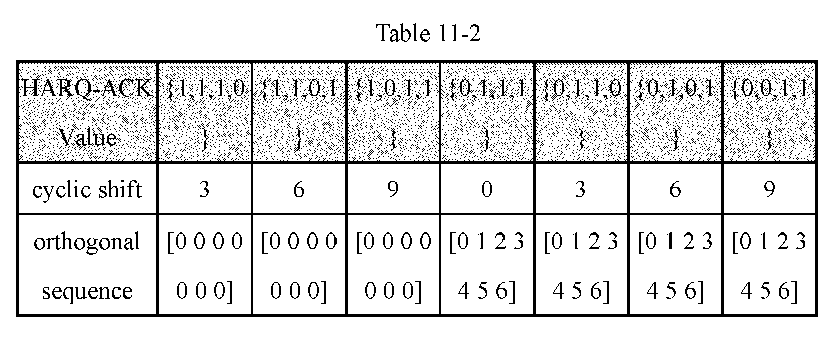

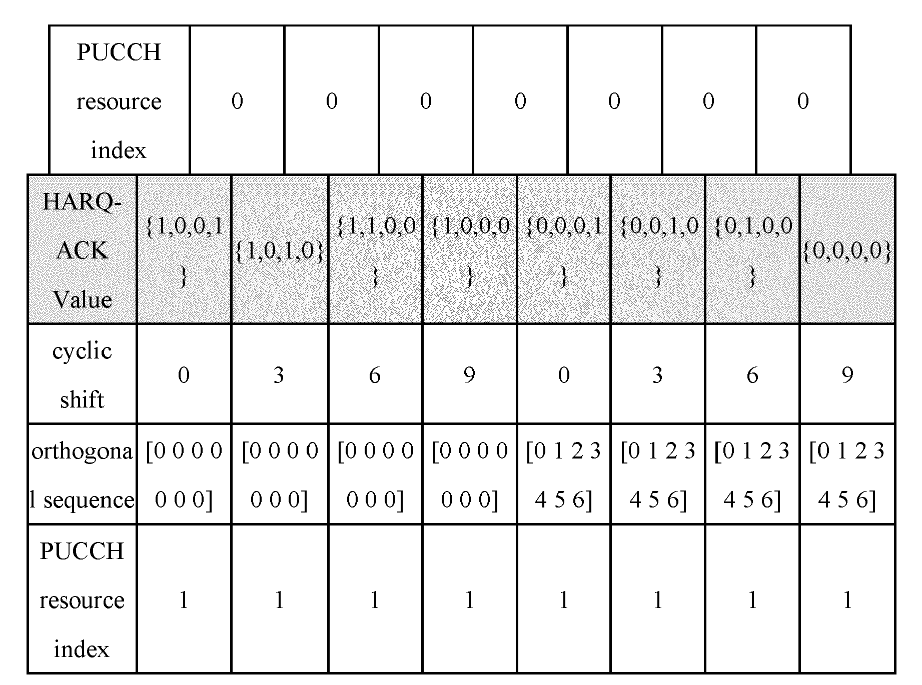

An embodiment of the present disclosure further provides an HARQ information processing apparatus. Fig. 3 is a schematic structural diagram of an HARQ information processing apparatus according to the embodiment of the present disclosure; as shown in Fig. 3, the apparatus includes: a first determining unit 301, configured to determine, based on a predefinition or a configuration configured by a network device, a mapping between HARQ information and at least one of following PUCCH information: a parameter value used for calculating a cyclic shift, an index of an orthogonal cover code, or a PUCCH resource index.

In some optional embodiments of the present disclosure, the first determining unit 301 is further configured to determine, based on HARQ information to be reported and the mapping, at least one of the following information for a PUCCH transmission: the parameter value used for calculating the cyclic shift, the index of the orthogonal cover code, or the PUCCH resource index.

In some optional embodiments of the present disclosure, the apparatus further includes: a first communication unit 302, configured to transmit the PUCCH based on at least one of the following information for the PUCCH transmission: the parameter value used for calculating the cyclic shift, the index of the orthogonal cover code, or the PUCCH resource index, and based on a PUCCH resource or resource set configured by the network device.

In some optional embodiments of the present disclosure, the PUCCH is used for reporting HARQ information of a PDSCH carrying multicast and/or broadcast service or HARQ information of PDSCH shared by multiple terminals.

In some optional embodiments of the present disclosure, the first communication unit 302 is further configured to obtain the PUCCH resource or resource set configured by the network device, wherein the PUCCH resource or resource set is associated with the multicast and/or broadcast service, or associated with the PDCCH scheduling the multicast and/or broadcast service.

In some optional embodiments of the present disclosure, the first communication unit 302 is configured to receive a first higher layer signaling from the network device, wherein the first higher layer signaling includes configuration information of the PUCCH resource or resource set.

In some optional embodiments of the present disclosure, the apparatus further includes: a second communication unit 303, configured to receive a second higher layer signaling from the network device, wherein the second higher layer signaling includes the mapping between the HARQ information and the at least one of the following PUCCH information: the parameter value used for calculating the cyclic shift, the index of the orthogonal cover code, or the PUCCH resource index.

In some optional embodiments of the present disclosure, the first determining unit 301 is further configured to determine, based on a reception of at least one PDSCH for carrying multicast and/or broadcast service or associated with the multicast and/or broadcast service, the HARQ information to be reported.

In an embodiment of the present disclosure, the apparatus is applied in a terminal. In practical applications, the first determining unit 301 in the apparatus can be implemented by, for example, a central processing unit (CPU), a digital signal processor (DSP), a microcontroller unit (MCU), or a field-programmable gate array (FPGA). In practical applications, the first communication unit 302 and the second communication unit 303 in the apparatus can be implemented by a communication module (including: basic communication kit, operating system, communication module, standardized interface and protocol, etc.) and transmitting and receiving antennas.

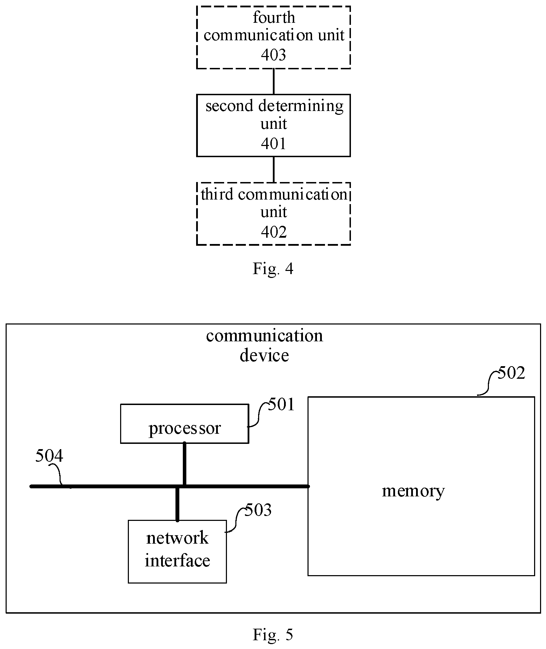

An embodiment of the present disclosure further provides an HARQ information processing apparatus. Fig. 4 is another schematic structural diagram of an HARQ information processing apparatus according to the embodiment of the present disclosure; as shown in Fig. 4, the apparatus includes: a second determining unit 401, configured to determine, based on a predefinition or a configuration configured by the network device for a terminal, a mapping between HARQ information and at least one of following PUCCH information: a parameter value used for calculating a cyclic shift, an index of an orthogonal cover code, or a PUCCH resource index.

In some optional embodiments of the present disclosure, the apparatus further includes: a third communication unit 402, configured to receive a PUCCH from the terminal, and determine at least one of the following information of the PUCCH: the parameter value used for calculating the cyclic shift, the index of the orthogonal cover code, or the PUCCH resource index;
wherein the second determining unit 401 is further configured to determine HARQ information based on the mapping and the at least one of the following information of the PUCCH: the parameter value used for calculating the cyclic shift, the index of the orthogonal cover code, or the PUCCH resource index.

In some optional embodiments of the present disclosure, the PUCCH is used for reporting HARQ information of a PDSCH carrying multicast and/or broadcast service or HARQ information of PDSCH shared by multiple terminals.

In some optional embodiments of the present disclosure, the third communication unit 402 is further configured to configure, for the terminal, a PUCCH resource or resource set for transmitting the PUCCH; wherein the PUCCH resource or resource set is associated with the multicast and/or broadcast service, or associated with the PDCCH scheduling the multicast and/or broadcast service.

In some optional embodiments of the present disclosure, the third communication unit 402 is configured to send a first higher layer signaling to the terminal, wherein the first higher layer signaling includes configuration information of the PUCCH resource or resource set.

In some optional embodiments of the present disclosure, the apparatus further includes: a fourth communication unit 403, configured to send a second higher layer signaling to the terminal, wherein the second higher layer signaling includes the mapping between the HARQ information and the at least one of the following PUCCH information: the parameter value used for calculating the cyclic shift, the index of the orthogonal cover code, or the PUCCH resource index.

In an embodiment of the present disclosure, the apparatus is applied in a network device. In practical applications, the second determining unit 401 in the apparatus can be implemented by, for example, a CPU, a DSP, an MCU, or an FPGA. In practical applications, the third communication unit 402 and the fourth communication unit 403 in the apparatus can be implemented by a communication module (including: basic communication kit, operating system, communication module, standardized interface and protocol, etc.) and transmitting and receiving antennas.

It should be noted that processing of HARQ information performed by the HARQ information processing apparatus according to the foregoing embodiments is only illustrated exemplarily in accordance with the division of the foregoing program modules. In practical applications, the foregoing processing can be assigned to be completed by different program modules as needed, that is, the internal structure of the apparatus may be divided into different program modules to complete all or a part of the aforementioned processing. In addition, the HARQ information processing apparatus according to the foregoing embodiments and the HARQ information processing method embodiment belong to the same concept, and for a detailed implementation of the HARQ information processing apparatus, reference can be made to the method embodiments, which will not be repeated here.

An embodiment of the present disclosure further provides a communication device. Fig. 5 is a schematic structural diagram of hardware of the communication device according to the embodiment of the present disclosure; as shown in Fig. 5, the communication device includes a memory 502, a processor 501, and a computer program stored in the memory 502 and capable of running on the processor 501. The processor 501 is configured to execute the program to implement the steps of the HARQ information processing method performed by the terminal according to the embodiment of the present disclosure; or, the processor 501 is configured to execute the program to implement the steps of the HARQ information processing method performed by the network device according to the embodiment of the present disclosure.

The communication device may also include a network interface 503. It can be understood that the various components in the communication device are coupled together through a bus system 504. It can be understood that the bus system 504 is used to implement the connection and communication between these components. In addition to a data bus, the bus system 504 also includes a power bus, a control bus, and a status signal bus. However, for clarity, all types of buses are marked as bus system 504 in Figure 5.

It can be understood that the memory 502 may be a volatile memory or a non-volatile memory, or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface storage, a compact disc, or a compact disc read-only memory (CD-ROM); the magnetic surface storage may be a disk storage or a tape storage. The volatile memory may be a random access memory (RAM) used as an external highspeed cache. By way of example and without limitation, many forms of RAMs can be used, for example, a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a Synclink dynamic random access memory (SLDRAM), and a direct Rambus random access memory (DRRAM). The memory 502 described in the embodiments of the present disclosure is intended to include, but is not limited to, these and any other suitable types of memories.

The method disclosed in the foregoing embodiments of the present disclosure can be applied in the processor 501 or implemented by the processor 501. The processor 501 may be an integrated circuit chip with signal processing capabilities. In the implementation process, the steps of the foregoing method can be completed by the integrated logic circuit of the hardware in the processor 501 or by instructions in the form of software. The foregoing processor 501 may be a general-purpose processor, a DSP, or other programmable logic devices, discrete gates or transistor logic devices, discrete hardware components, etc. The processor 501 may implement or execute the various methods, steps, and logic block diagrams disclosed in the embodiments of the present disclosure. A general-purpose processor may be a microprocessor or any conventional processor, etc. The steps of the method disclosed in the embodiments of the present disclosure can be directly implemented by a hardware decoding processor, or implemented by a combination of hardware in the decoding processor and software modules. The software module can reside in a storage medium, which is located in the memory 502. The processor 501 reads the information in the memory 502 and completes the steps of the foregoing method by means of its hardware.

In an exemplary embodiment, the communication device can be implemented by one or more application specific integrated circuits (ASICs), DSPs, programmable logic devices (PLDs), complex programmable logic devices (CPLDs), FPGAs, general-purpose processors, controllers, MCUs, microprocessors, or other electronic components, to perform the foregoing method.

In an exemplary embodiment, the embodiment of the present disclosure further provides a computer-readable storage medium, such as a memory 502 including a computer program. The computer program can be executed by the processor 501 of the communication device to complete the steps described in the foregoing method. The computer-readable storage medium may be a memory such as an FRAM, a ROM, a PROM, an EPROM, an EEPROM, a Flash Memory, a magnetic surface storage, a compact disc, or a CD-ROM; it may also be various devices including one of or a combination of the foregoing memories.

The computer-readable storage medium provided by the embodiments of the present disclosure stores therein a computer program, wherein the computer program is configured to be executed by a processor to implement the steps of the HARQ information processing method performed by the terminal according to the embodiments of the present disclosure; or the computer program is configured to be executed by a processor to implement the steps of the HARQ information processing method performed by the network device according to the embodiments of the present disclosure.

The methods disclosed in the method embodiments provided in this disclosure can be combined arbitrarily to obtain new method embodiments, as long as no conflict is incurred.

The features disclosed in the product embodiments provided in this disclosure can be combined arbitrarily to obtain new product embodiments, as long as no conflict is incurred.

The features disclosed in the method or device embodiments provided in this disclosure can be combined arbitrarily to obtain new method or device embodiments, as long as no conflict is incurred.

In the embodiments provided in this disclosure, it should be understood that the disclosed devices and methods may be implemented in other ways. The described device embodiments are merely illustrative, for example, the division of the units is merely a logical functional division, and there may be other division methods in actual implementation, such as: multiple units or components can be combined, or integrated into another system, or some features can be ignored or not executed. In addition, the coupling, or direct coupling, or communication connection between the various components shown or discussed can be through indirect coupling or communication connection between some interfaces, devices or units, and can be electrical, mechanical or in other forms.

The units described as separate components above may be or may not be physically separated, and the components shown as units may be or may not be physical units, i.e., they may be located in one place or distributed over multiple network units; some or all of the units may be selected according to actual needs to achieve the purpose of the scheme of this embodiment.

In addition, in each embodiment of this disclosure, various functional units can be integrated into one processing unit, or each unit can be a separate unit, or two or more units can be integrated into one unit; the integrated unit can be implemented in hardware form, or in a form combining hardware and software functional unit.

It will be understood by those of ordinary skill in the art that, all or a part of the steps implementing the foregoing method embodiments can be completed by hardware related to program instructions. The program can be stored in a computer-readable storage medium. When the program is executed, the steps of the method embodiments are performed. The storage medium includes a medium that can store program codes, such as a mobile storage device, a ROM, a RAM, a magnetic disk or an optical disc.

Alternatively, if the integrated unit as described in the present disclosure is implemented in form of a software functional module and sold or used as an independent product, it can also be stored in one computer-readable storage medium. Based on such an understanding, essential parts, or parts contributing to the related art, of the technical solution of the present disclosure may be implemented in a form of a software product. This computer software product is stored in a storage medium and includes several instructions for enabling a computer device (which may be a personal computer, server, or a network device, etc.) to perform all or part of the methods described in various embodiments of the present disclosure. The storage medium includes a medium that can store program codes, such as a mobile storage device, a ROM, a RAM, a magnetic disk or an optical disc.

The aforementioned are merely specific implementations of the present disclosure, but the scope of the disclosure is by no means limited thereto. Any modifications or replacements that would easily occurred to those skilled in the art, without departing from the technical scope disclosed in the disclosure, should be encompassed in the scope of the present disclosure. Therefore, the scope of the present disclosure is to be determined by the scope of the claims.

## Claims

1. A hybrid automatic repeat request (HARQ) information processing method, comprising:
determining, by a terminal, a mapping between HARQ information and at least one of following physical uplink control channel (PUCCH) information: a parameter value used for calculating a cyclic shift, an index of an orthogonal cover code or a PUCCH resource index, based on a predefinition or a configuration configured by a network device.

2. The HARQ information processing method according to claim 1, further comprising:
determining, by the terminal based on HARQ information to be reported and the mapping, at least one of the following information for a PUCCH transmission: the parameter value used for calculating the cyclic shift, the index of the orthogonal cover code or the PUCCH resource index.

3. The HARQ information processing method according to claim 2, further comprising:
transmitting, by the terminal, the PUCCH based on the at least one of the following information for the PUCCH transmission: the parameter value used for calculating the cyclic shift, the index of the orthogonal cover code or the PUCCH resource index, and based on a PUCCH resource or resource set configured by the network device.

4. The HARQ information processing method according to claim 3, wherein the PUCCH is used for reporting HARQ information of a physical downlink shared channel (PDSCH) carrying multicast and/or broadcast service, or HARQ information of PDSCH shared by multiple terminals.

5. The HARQ information processing method according to claim 3 or 4, further comprising:
receiving, by the terminal, a first higher layer signaling from the network device, wherein the first higher layer signaling comprises configuration information of the PUCCH resource or resource set.

6. The HARQ information processing method according to claim 1, wherein the determining, by the terminal, the mapping between the HARQ information and the at least one of the following PUCCH information: the parameter value used for calculating the cyclic shift, the index of the orthogonal cover code or the PUCCH resource index, based on the configuration configured by the network device comprises:
receiving, by the terminal, a second higher layer signaling from the network device, wherein the second higher layer signaling comprises the mapping between the HARQ information and the at least one of the following PUCCH information: the parameter value used for calculating the cyclic shift, the index of the orthogonal cover code or the PUCCH resource index.

7. The HARQ information processing method according to claim 2, further comprising:
determining, by the terminal based on a reception of at least one PDSCH for carrying multicast and/or broadcast service or associated with the multicast and/or broadcast service, the HARQ information to be reported.

8. A hybrid automatic repeat request (HARQ) information processing method, comprising:
determining, by a network device, a mapping between HARQ information and at least one of following physical uplink control channel (PUCCH) information: a parameter value used for calculating a cyclic shift, an index of an orthogonal cover code or a PUCCH resource index, based on a predefinition or a configuration configured by the network device for a terminal.

9. The HARQ information processing method according to claim 8, further comprising:
receiving, by the network device, a PUCCH from the terminal, and determining, by the network device, at least one of the following PUCCH information of the PUCCH: the parameter value used for calculating the cyclic shift, the index of the orthogonal cover code, or the PUCCH resource index;
determining, by the network device, HARQ information based on the mapping and the at least one of the following PUCCH information of the PUCCH: the parameter value used for calculating the cyclic shift, the index of the orthogonal cover code, or the PUCCH resource index.

10. The HARQ information processing method according to claim 9, wherein the PUCCH is used for reporting HARQ information of a physical downlink shared channel (PDSCH) carrying multicast and/or broadcast service, or HARQ information of PDSCH shared by multiple terminals.

11. The HARQ information processing method according to claim 9, further comprising:
configuring, by the network device for the terminal, a PUCCH resource or resource set for transmitting the PUCCH.

12. The HARQ information processing method according to claim 11, wherein the configuring, by the network device for the terminal, the PUCCH resource or resource set for transmitting the PUCCH comprises:
sending, by the network device, a first higher layer signaling to the terminal, wherein the first higher layer signaling comprises configuration information of the PUCCH resource or resource set.

13. The HARQ information processing method according to claim 8, wherein configuring, by the network device for the terminal, the mapping between the HARQ information and the at least one of the following PUCCH information: the parameter value used for calculating the cyclic shift, the index of the orthogonal cover code or the PUCCH resource index, comprises:
sending, by the network device, a second high-level signaling to the terminal, wherein the second higher layer signaling comprises the mapping between the HARQ information and the at least one of the following PUCCH information: the parameter value used for calculating the cyclic shift, the index of the orthogonal cover code or the PUCCH resource index.

14. A hybrid automatic repeat request (HARQ) information processing apparatus, comprising:
a first determining unit, configured to determine a mapping between HARQ information and at least one of following physical uplink control channel (PUCCH) information: a parameter value used for calculating a cyclic shift, an index of an orthogonal cover code, or a PUCCH resource index, based on a predefinition or a configuration configured by a network device.

15. The HARQ information processing apparatus according to claim 14, wherein the first determining unit is further configured to determine, based on HARQ information to be reported and the mapping, at least one of the following information for a PUCCH transmission: the parameter value used for calculating the cyclic shift, the index of the orthogonal cover code, or the PUCCH resource index.

16. The HARQ information processing apparatus according to claim 15, further comprising: a first communication unit, configured to transmit the to-be-transmitted PUCCH based on the at least one of the following information for the PUCCH transmission: the parameter value used for calculating the cyclic shift, the index of the orthogonal cover code, or the PUCCH resource index, and based on a PUCCH resource or resource set configured by the network device.

17. The HARQ information processing apparatus according to claim 16, wherein the PUCCH is used for reporting HARQ information of a physical downlink shared channel (PDSCH) carrying multicast and/or broadcast service or HARQ information of PDSCH shared by multiple terminals.

18. The HARQ information processing apparatus according to claim 16 or 17, wherein the first communication unit is further configured to receive a first higher layer signaling from the network device, wherein the first higher layer signaling comprises configuration information of the PUCCH resource or resource set.

19. The HARQ information processing apparatus according to claim 14, further comprising: a second communication unit, configured to receive a second higher layer signaling from the network device, wherein the second higher layer signaling comprises the mapping between the HARQ information and the at least one of the following PUCCH information: the parameter value used for calculating the cyclic shift, the index of the orthogonal cover code, or the PUCCH resource index.

20. The HARQ information processing apparatus according to claim 15, wherein the first determining unit is further configured to determine, based on a reception of at least one PDSCH for carrying multicast and/or broadcast service or associated with the multicast and/or broadcast service, the HARQ information to be reported.

21. A hybrid automatic repeat request (HARQ) information processing apparatus, comprising:
a second determining unit, configured to determine a mapping between HARQ information and at least one of following physical uplink control channel (PUCCH) information: a parameter value used for calculating a cyclic shift, an index of an orthogonal cover code, or a PUCCH resource index, based on a predefinition or a configuration configured by the network device for a terminal.

22. The HARQ information processing apparatus according to claim 21, further comprising: a third communication unit, configured to receive a PUCCH from the terminal, and determining at least one of the following PUCCH information of the PUCCH: the parameter value used for calculating the cyclic shift, the index of the orthogonal cover code, or the PUCCH resource index;
wherein the second determining unit is further configured to determine HARQ information based on the mapping and the at least one of the following PUCCH information of the PUCCH: the parameter value used for calculating the cyclic shift, the index of the orthogonal cover code, or the PUCCH resource index.

23. The HARQ information processing apparatus according to claim 22, wherein the PUCCH is used for reporting HARQ information of a physical downlink shared channel (PDSCH) carrying multicast and/or broadcast service or HARQ information of PDSCH shared by multiple terminals.

24. The HARQ information processing apparatus according to claim 22, wherein the third communication unit is further configured to configure, for the terminal, a PUCCH resource or resource set for transmitting the PUCCH.

25. The HARQ information processing apparatus according to claim 24, wherein the third communication unit is further configured to send a first higher layer signaling to the terminal, wherein the first higher layer signaling comprises configuration information of the PUCCH resource or resource set.

26. The HARQ information processing apparatus according to claim 21, further comprising: a fourth communication unit, configured to send a second higher layer signaling to the terminal, wherein the second higher layer signaling comprises the mapping between the HARQ information and the at least one of the following PUCCH information: the parameter value used for calculating the cyclic shift, the index of the orthogonal cover code, or the PUCCH resource index.

27. A computer-readable storage medium storing therein a computer program, wherein the computer program is configured to be executed by a processor to implement the steps in the method according to any one of claims 1 to 7, or, to implement the steps in the method according to any one of claims 8 to 13.

28. A communication device, comprising a memory, a processor, and a program stored in the memory and capable of running on the processor, wherein the processor is configured to execute the program to implement the steps in the method according to any one of claims 1 to 7, or, to implement the steps in the method according to any one of claims 8 to 13.
